# EUROPEAN PATENT SPECIFICATION

(11) **EP 2 477 463 B1**
(45) Date of publication and mention of the grant of the patent: **19.08.2015**
(21) Application number: 12151393.1
(22) Date of filing: 17.01.2012
(51) Int. Cl.: H05B 37/03, H05B 33/08

(54) **Apparatus and method for sensing failure**
Vorrichtung und Verfahren zur Fehlererkennung
Appareil et procédé de détection de défaillances

(30) Priority: 17.01.2011 KR 20110004406
(43) Date of publication of application: 18.07.2012
(73) Proprietor: Samsung Electronics Co., Ltd., Suwon-si, Gyeonggi-do, 443-742 (KR)
(72) Inventor: Nam, Kyung Pil, 443-726 Gyeonggi-do (KR)
(74) Representative: Grünecker Patent- und Rechtsanwälte PartG mbB

(56) References cited:
- EP-A2- 1 006 759
- FR-A1- 2 724 749
- US-A1- 2004 061 450
- US-A1- 2010 045 194
- US-A1- 2010 181 941

## Description

### BACKGROUND

### 1. Field

Example embodiments relate to an apparatus and method for sensing a failure with respect to a plurality of light emitting diode (LED) strings.

### 2. Description of the Related Art

A Light Emitting Diode (LED) corresponding to a light emitting device may have been developed in a form wherein a chip may have a predetermined size, for example, 1 x 1 mm², because of a current injection limit, and the like.

According to recent improvement in light emitting efficiency, the LED has been widely applied from an initial signal display to a light source of a large display apparatus such as a Back Light Unit (BLU) and a Liquid Crystal Display (LCD), and lighting, since the LED consumes less power and lasts longer in comparison with a conventional lighting such as a light bulb and a fluorescent light.

Accordingly, there is a need for multiple LED chips to be manufactured in an array form so that the multiple LED chips may be used in an application outputting large amounts of light, for example, a lighting, a headlamp, and the like that may produce a high light output.

In this instance, an LED string may be manufactured and used by connecting a plurality of separate LED chips in series or in parallel through a wire bonding scheme, or by connecting LED chips on the same substrate through a special process.

Generally, an LED array may include a plurality of strings, and all of the LED strings may need to be connected in series in order to block a power supply of the entire LED when a failure occurs with respect to at least one LED.

In the case that all of the LED strings are connected in series, when an input voltage is lower than a forward voltage drop V_{f} of the entire LED, a boost circuit may be needed to be applied and accordingly costs may be increased, and an electro-magnetic compatibility (EMC) noise may occur.

### SUMMARY

The example embodiments may include an apparatus for sensing a failure of a light emitting diode (LED) string, that may include a current control unit to apply a current to at least one first LED string and at least one second LED string that may be connected in parallel with each other, at least one first failure sensor to sense whether a failure occurs with respect to each of the at least one first LED string, at least one second failure sensor to sense whether a failure occurs with respect to each of the at least one second LED string, and a failure result judgment unit to transmit failure information to the current control unit when a failure is sensed with respect to at least one of the at least one first LED string and the at least one second LED string, as the sensing result of the at least one first failure sensor and the at least one second failure sensor, and when the failure information is received, the current control unit may block the entire current that may be applied to the at least one first LED string and the at least one second LED string.

As the sensing result of the at least one first failure sensor and the at least one second failure sensor, when both the at least one first LED string and the at least one second LED string operate normally, the current control unit may continuously apply the current to the at least one first LED string and the at least one second LED string.

The at least one first failure sensor, the at least one second failure sensor, and the failure result judgment unit may correspond to transistors.

The at least one first failure sensor and the at least one second failure sensor may be turned on when the at least one first LED string and the at least one second LED string operate normally, as the sensing result.

The failure result judgment unit may be turned off to disallow transmission of failure information to the current control unit when both the at least one first failure sensor and the at least one second failure sensor are turned on.

The at least one first failure sensor or the at least one second failure sensor may be turned off when a failure of each of the at least one first LED string and the at least one second LED string is sensed.

The failure result judgment unit may be turned on by applying an input voltage that may be applied from the outside of the at least one first failure sensor or the at least one second failure sensor, and may generate the failure information and may transmit the generated failure information to the current control unit when at least one of the at least one first failure sensor and the at least one second failure sensor is turned off.

The apparatus for sensing the failure may further include a malfunction monitor unit to provide a malfunction result to the current control unit by recognizing whether malfunctions occur with respect to the at least one first failure sensor and the at least one second failure sensor.

The malfunction monitor unit may control the failure result judgment unit to recognize sensing results of the at least one first failure sensor and the at least one second failure sensor when the input voltage is applied greater than a malfunction setting voltage, by applying a voltage equal to the input voltage that may be applied to the current control unit.

The malfunction monitor unit may include an operating voltage setting unit to set the malfunction setting voltage.

The operating voltage setting unit may include at least one resistance, and may set a malfunction setting voltage by distributing the input voltage to the at least one resistance.

The example embodiments may also include a method of sensing a failure of an LED string, that may include applying, by a current control unit, a current to at least one first LED string and at least one second LED string that may be connected in parallel with each other, sensing whether a failure occurs with respect to each of the at least one first LED string and the at least one second LED string, and transmitting failure information to the current control unit when a failure is sensed with respect to at least one of the at least one first LED string and the at least one second LED string, as the sensing result, and blocking the entire current that may be applied to the at least one first LED string and the at least one second LED string, using the current control unit, when the failure information is received

Additional aspects of embodiments will be set forth in part in the description which follows and, in part, will be apparent from the description, or may be learned by practice of the disclosure.

### BRIEF DESCRIPTION OF THE DRAWINGS

These and/or other aspects will become apparent and more readily appreciated from the following description of embodiments, taken in conjunction with the accompanying drawings of which:
FIG. 1 illustrates a configuration of an apparatus for sensing a failure according to example embodiments;
FIG. 2 illustrates another configuration of an apparatus for sensing a failure according to example embodiments;
FIG. 3 illustrates a method of sensing a failure according to example embodiments; and
FIG. 4 illustrates a circuit of an apparatus for sensing a failure according to example embodiments.

### DETAILED DESCRIPTION

Reference will now be made in detail to embodiments, examples of which are illustrated in the accompanying drawings, wherein like reference numerals refer to the like elements throughout. Embodiments are described below to explain the present disclosure by referring to the figures.

When it is determined that a detailed description related to a related known function or configuration which may make the purpose of the present disclosure unnecessarily ambiguous in describing the present disclosure, the detailed description will be omitted. Also, terminologies used herein are defined to appropriately describe the exemplary embodiments and thus may be changed depending on a user, the intent of an operator, or a custom. Accordingly, the terminologies must be defined based on the following overall description of this specification. Reference will now be made in detail to exemplary embodiments, examples of which are illustrated in the accompanying drawings, wherein like reference numerals refer to the like elements throughout.

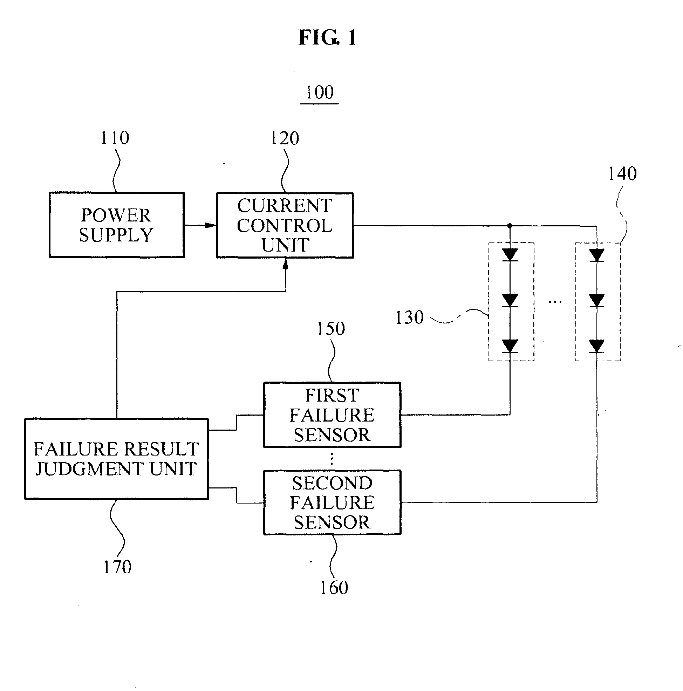

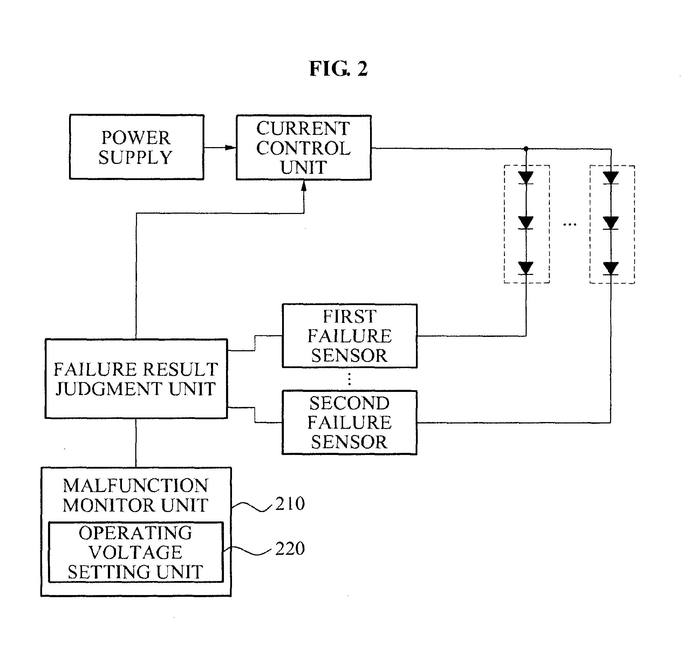

FIG. 1 illustrates a configuration of an apparatus 100 for sensing a failure, and FIG 2 illustrates another configuration of the apparatus for sensing the failure, according to example embodiments.

Referring to FIG. 1, the apparatus 100 for sensing the failure may include a current control unit 120, and at least one first light emitting diode (LED) string 130, at least one second LED string 140, at least one first failure sensor 150, at least one second failure sensor 160, and a failure result judgment unit 170.

The apparatus 100 for sensing the failure may sense a failure of an LED that may be arrayed with a plurality of LED strings, for example, an LED array including the at least one first LED string 130, and the at least one second LED string 140, and may block a power supply of the entire LED when a failure occurs with respect to a part of the LED.

Referring to FIG. 2, the apparatus 100 for sensing the failure may further include a malfunction monitor unit 210 including an operating voltage setting unit 220.

A method of sensing a failure of an LED arrayed with a plurality of strings, using the apparatus 100 for sensing the failure, as well as a configuration of the apparatus 100 for sensing the failure will be further described.

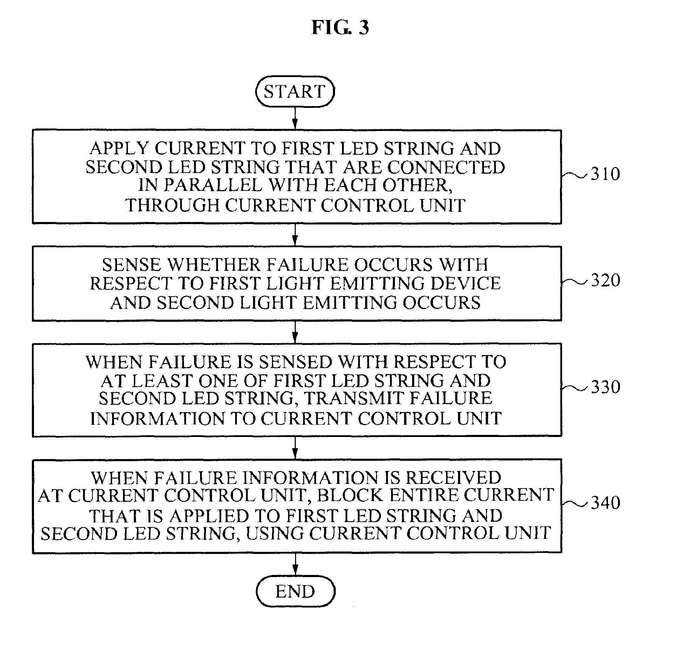

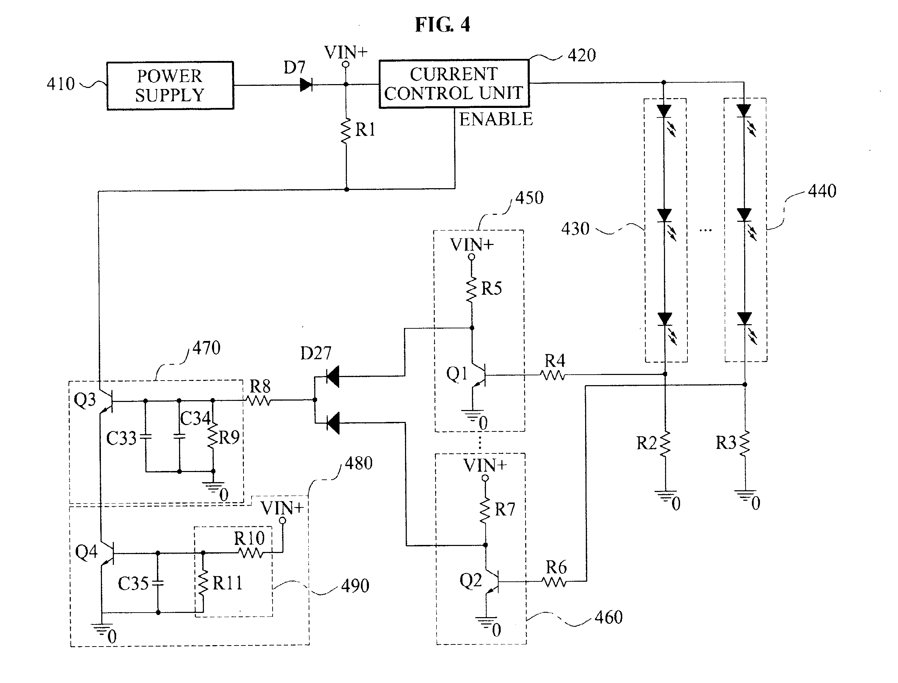

FIG. 3 illustrates a method of sensing a failure and FIG. 4 illustrates a circuit of an apparatus for sensing a failure, according to example embodiments.

Referring to FIGS. 3 and 4, the apparatus 100 for sensing the failure may apply a current from a power supply 410 to at least one first LED string and at least one second LED string that may be connected in parallel with each other, using a current control unit 420, in operation 310.

In operation 320, at least one first failure sensor 450 may sense whether a failure occurs with respect to each of the at least one first LED string 430, and at least one second failure sensor 460 may sense whether a failure occurs with respect to each of the at least one second LED string 440, thereby monitoring the entire LED strings that may be connected in parallel with one another.

In operation 330, as a sensing result of the at least one first failure sensor 450 and the at least one second failure sensor 460, when a failure is sensed with respect to at least one of the at least one first LED string 430 and the at least one second LED string 440, a failure result judgment unit 470 may transmit failure information to the current control unit 420.

In operation 340, when the failure information is received, the current control unit 420 may block the entire current that may be applied to the at least one first LED string 430 and the at least one second LED string 440.

As a sensing result of the at least one first failure sensor 450 and the at least one second failure sensor 460, when both the at least one first LED string 430 and the at least one second LED string 440 operate normally, the current control unit 420 may continuously apply the current to the at least one first LED string 430 and the at least one second LED string 440.

As illustrated in FIG. 4, the at least one first failure sensor 450, and the at least one second failure sensor 460, and the failure result judgment unit 470 may correspond to transistors.

As a sensing result, when the at least one first LED string 430 and the at least one second LED string 440 operate normally, the at least one first failure sensor 450 and the at least one second failure sensor 460 may be turned on, and accordingly a collector end of the LED strings, for example, the at least one first LED string 430 and the at least one second LED string 440 may have a low logic.

When both the at least one first failure sensor 450 and the at least one second failure sensor 460 are turned on, the failure result judgment unit 470 may be turned off and may disallow transmission of failure information to an enabled terminal of the current control unit 420, and accordingly the current control unit 420 may continue a constant current operation.

When a failure of the at least one first LED string 430 and the at least one second LED string 440 is sensed, the at least one first failure sensor 450 or the at least one second failure sensor 460 may be turned off respectively.

When at least one of the at least one first failure sensor 450 and the at least one second failure sensor 460 is turned off, the failure result judgment unit 470 may be turned on by applying an input voltage VIN that may be applied from the outside of the at least one first failure sensor 450 or the at least one second failure sensor 460, and may generate failure information to transmit the generated failure information to the current control unit 420.

When the failure information is received from the failure result judgment unit 470 by a failure of any one of a plurality of LED strings, for example, the at least one first LED string 430 and the at least one first LED string 440, the current control unit 420 may block the entire current with respect to the plurality of the LED strings, for example, the at least one first LED string 430 and the at least one first LED string 440, thereby blocking the entire power supply of the LED array.

The apparatus for sensing the failure may further include a malfunction monitor unit 480 that may provide a malfunction result to the current control unit 420 by recognizing whether malfunctions occur with respect to the at least one first failure sensor 450 and the at least one second failure sensor 460.

When an input voltage is applied greater than a malfunction setting voltage, by applying a voltage equal to the input voltage that may be applied to the current control unit 420, the malfunction monitor unit 480 may control the failure result judgment unit 470 to recognize sensing results of the at least one first failure sensor 450 and the at least one second failure sensor 460.

When the input voltage is gradually increased from a voltage at a point in time before the LED is turned on, at least one failure sensors, for example, the at least one first failure sensor 450 and the at least one second failure sensor 460 may operate although the LED is not yet turned on. That is, the malfunction monitor unit 480 may prevent that the at least one failure sensors, for example, the at least one first failure sensor 450 and the at least one second failure sensor 460 may recognize, as a failure, that the LED may fail to be turned on because of a low input voltage although the LED is normal.

The malfunction monitor unit 480 may further include an operating voltage setting unit 490 that may set the malfunction setting voltage.

The operating voltage setting unit 490 may include at least one resistance, and may set an operating setting voltage by distributing the input voltage to the at least one resistance.

For example, the operating voltage setting unit 490 including resistances R10 and R11 may set a voltage at which the malfunction monitor unit 480 may operate by distributing the input voltage, and may also set an operating voltage of the failure result judgment unit 470 that may be connected with the malfunction monitor unit 480.

According to example embodiments, a power supply of an entire LED may be blocked when a failure occurs with respect to a part of the LED, by sensing a failure of the LED that may be arrayed with a plurality of strings.

According to example embodiments, strings of an entire LED may be configured to be connected in parallel, and accordingly a configuration of an operating circuit may be simple, and cost as well as electro-magnetic compatibility (EMC) noise may be reduced.

The above-described embodiments may be recorded in non-transitory computer-readable media including program instructions to implement various operations embodied by a computer. The media may also include, alone or in combination with the program instructions, data files, data structures, and the like. Examples of non-transitory computer-readable media include magnetic media such as hard disks, floppy disks, and magnetic tape; optical media such as CD ROM discs and DVDs; magneto-optical media such as floptical disks; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described embodiments, or vice versa.

Although embodiments have been shown and described, it would be appreciated by those skilled in the art that changes may be made in these embodiments without departing from the scope of the invention defined by the claims.

## Claims

1. An apparatus for sensing a failure of a light emitting diode, LED, string, the apparatus comprising:
a current control unit (420) to apply a current to at least one first LED string (430) and at least one second LED string (440) that are connected in parallel with each other;
at least one first failure sensor (450) to sense whether a failure occurs with respect to each of the at least one first LED string;
at least one second failure sensor (460) to sense whether a failure occurs with respect to each of the at least one second LED string; and
a failure result judgment unit (470) to transmit failure information to the current control unit when a failure is sensed with respect to at least one of the at least one first LED string and the at least one second LED string, as the sensing result of the at least one first failure sensor and the at least one second failure sensor,
wherein, when the failure information is received, the current control unit blocks the entire current that is applied to the at least one first LED string and the at least one second LED string; and
**characterized by**
a malfunction monitor unit (480) to provide a malfunction result to the current control unit by recognizing whether malfunctions occur with respect to the at least one first failure sensor and the at least one second failure sensor due to an input voltage applied to the current control unit that is not sufficient for turning on the at least one first LED string (430) and for the at least one second LED string (440), wherein the malfunction monitor unit (480) controls the failure result judgment unit to recognize sensing results of the at least one first failure sensor and the at least one second failure sensor only when the applied input voltage is greater than a malfunction setting voltage, by applying a voltage to the malfunction monitor unit (480) that is equal to the input voltage that is applied to the current control unit (420).

2. The apparatus of claim 1, wherein, when both the at least one first LED string (430) and the at least one second LED string (440) operate normally, as the sensing result of the at least one first failure sensor (450) and the at least one second failure sensor (460), the current control unit (420) continuously applies the current to the at least one first LED string (470) and the at least one second LED string (440).

3. The apparatus of claim 1, wherein the at least one first failure sensor (450), the at least one second failure sensor (460), and the failure result judgment unit (470) correspond to transistors.

4. The apparatus of claim 3, wherein the at least one first failure sensor (450) and the at least one second failure sensor (460) are turned on when the at least one first LED string (430) and the at least one second LED string (440) operate normally, as the sensing result.

5. The apparatus of claim 4, wherein the failure result judgment unit (470) is turned off to disallow transmission of failure information to the current control unit (420) when both the at least one first failure sensor (450) and the at least one second failure sensor (460) are turned on.

6. The apparatus of claim 3, wherein the at least one first failure sensor (450) or the at least one second failure sensor (460) is turned off when a failure of each of the at least one first LED string (430) and the at least one second LED string (440) is sensed.

7. The apparatus of claim 6, the failure result judgment unit (470) is turned on by applying an input voltage that is applied from the outside of the at least one first failure sensor (450) or the at least one second failure sensor (460), and generates the failure information and transmits the generated failure information to the current control unit (420) when at least one of the at least one first failure sensor and the at least one second failure sensor is turned off.

8. The apparatus of claim 7, wherein the malfunction monitor unit (480) comprises:
an operating voltage setting unit (490) to set the malfunction setting voltage.

9. The apparatus of claim 8, wherein the operating voltage setting unit (490) comprises at least one resistance, and sets a malfunction setting voltage by distributing the input voltage to the at least one resistance.

10. A method of sensing a failure of a light emitting diode (LED) string, the method comprising:
Applying (310), by a current control unit, a current to at least one first LED string (430) and at least one second LED string (440) that are connected in parallel with each other;
sensing (320) whether a failure occurs with respect to each of the at least one first LED string (430) and the at least one second LED string (440) and;
transmitting (330) failure information to the current control unit when a failure is sensed with respect to at least one of the at least one first LED string (430) and the at least one second LED string (440), as the sensing result; and
blocking (340) the entire current that is applied to the at least one first LED string (430) and the at least one second LED string (440), using the current control unit, when the failure information is received; and
**characterized by**
judging, by a malfunction monitor unit (480), hether a result of sensing a failure wish respect to the at least one first LED string (430) and the at least one second LED string (440) is normal due to an input voltage applied to the current control unit that is not sufficient for turning on the at least one first LED string (430) and for the at least one second LED string (440) or by judging the result of the sensing the failure with respect to the at least one first LED string (430) and the at least one second LED string (440) to be normal when the applied input voltage is greater than a malfunction setting voltage, by applying to the malfunction monitor unit (480) a voltage equal to the input voltage that is applied to the current control unit (420).

11. The method of claim 10, wherein the applying of the current to at least one first LED string (430) and at least one second LED string (440) comprises:
continuously applying the current to the at least one first LED string (430) and the at least one second LED string (440) when both the at least one first LED string (430) and the at least one second LED string (440) operate normally, as the sensing result.

## Patentansprüche

1. Vorrichtung zur Fehlererkennung einer LED-Kette (Leuchtdiodeneinheit), wobei die Vorrichtung umfasst:
eine Stromsteuereinheit (420), zum Anlegen eines Stroms an mindestens eine erste LED-Kette (430) und mindestens eine zweite LED-Kette (440), die parallel geschaltet sind;
mindestens einen ersten Fehlersensor (450) zum Ermitteln, ob ein Fehler bezüglich jeder der mindestens einen ersten LED-Kette auftritt;
mindestens einen zweiten Fehlersensor (460) zum Ermitteln, ob ein Fehler bezüglich jeder der mindestens einen zweiten LED-Kette auftritt; und
eine Fehlerergebnis-Beurteilungseinheit (470) zum Senden von Fehlerinformationen an die Stromsteuereinheit, wenn ein Fehler bezüglich mindestens einer der mindestens einen ersten LED-Kette und der mindestens einen zweiten LED-Kette ermittelt wird, als das Ermittlungsergebnis des mindestens einen ersten Fehlersensors und des mindestens einen zweiten Fehlersensors,
bei, wenn die Fehlerinformationen empfangen werden, die Stromsteuereinheit den gesamten Strom, der an die mindestens eine erste LED-Kette und die mindestens eine zweite LED-Kette angelegt wird, blockiert; und
**gekennzeichnet durch**
eine Fehlfunktionsüberwachungseinheit (480) zum Bereitstellen eines Fehlfunktionsergebnisses für die Stromsteuereinheit **durch** Erkennen, ob die Fehlfunktionen bezüglich des mindestens einen ersten Fehlersensors und des mindestens einen zweiten Fehlersensors auftreten, aufgrund einer an die Stromsteuereinheit angelegten Eingangsspannung, die nicht ausreicht, um die mindestens eine erste LED-Kette (430) und die mindestens eine zweite LED-Kette (440) einzuschalten, wobei die Fehlfunktionsüberwachungseinheit die Fehlerergebnis-Beurteilungseinheit so steuert, dass sie die Ermittlungsergebnisse des mindestens einen ersten Fehlersensors und des mindestens einen zweiten Fehlersensors nur dann erkennt, wenn die angelegte Eingangsspannung größer als eine eingestellte Fehlfunktionsspannung ist, **durch** Anlegen einer Spannung an die Fehlfunktionsüberwachungseinheit (480), die gleich der Eingangsspannung ist, welche an die Stromsteuereinheit (420) angelegt wird.

2. Vorrichtung nach Anspruch 1, wobei, wenn sowohl die mindestens eine erste LED-Kette (430) als auch die mindestens eine zweite LED-Kette (440) als Ermittlungsergebnis des mindestens einen ersten Fehlersensors (450) und des mindestens einen zweiten Fehlersensors (460) normal arbeiten, die Stromsteuereinheit (420) kontinuierlich Strom zu der mindestens einen ersten LED-Kette (430) und der mindestens einen zweiten LED-Kette (440) leitet.

3. Vorrichtung nach Anspruch 1, wobei der mindestens eine erste Fehlersensor (450), der mindestens eine zweite Fehlersensor (460) und die Fehlerergebnis-Beurteilungseinheit (470) Transistoren entsprechen.

4. Vorrichtung nach Anspruch 3, wobei der mindestens eine erste Fehlersensor (450) und der mindestens eine zweite Fehlersensor (460) eingeschaltet werden, wenn die mindestens eine erste LED-Kette (430) und die mindestens eine zweite LED-Kette (440) als das Ermittlungsergebnis normal arbeiten.

5. Vorrichtung nach Anspruch 4, wobei die Fehlerergebnis-Beurteilungseinheit (470) ausgeschaltet wird, um das Senden von Fehlerinformationen an die Stromsteuereinheit (420) zu unterbinden, wenn sowohl der mindestens eine erste Fehlersensor (450) als auch der mindestens eine zweite Fehlersensor (460) eingeschaltet sind.

6. Vorrichtung nach Anspruch 3, wobei der mindestens eine erste Fehlersensor (450) oder der mindestens eine zweite Fehlersensor (460) ausgeschaltet wird, wenn ein Fehler in jeder der mindestens einen ersten LED-Kette (430) und der mindestens einen zweiten LED-Kette (440) ermittelt wird.

7. Vorrichtung nach Anspruch 6, wobei die Fehlerergebnis-Beurteilungseinheit (470) durch Anlegen einer Eingangsspannung eingeschaltet wird, die von außen von dem mindestens einen ersten Fehlersensor (450) oder dem mindestens einen zweiten Fehlersensor (460) angelegt wird, die Fehlerinformationen erzeugt und die erzeugten Fehlerinformationen an die Stromsteuereinheit (420) sendet, wenn mindestens einer des mindestens einen ersten Fehlersensors und des mindestens einen zweiten Fehlersensors ausgeschaltet wird.

8. Vorrichtung nach Anspruch 7, wobei Fehlfunktionsüberwachungseinheit (480) umfasst:
eine Betriebsspannungs-Einstellungseinheit (490) zum Einstellen der eingestellten Fehlfunktionsspannung.

9. Vorrichtung nach Anspruch 8, wobei die Betriebsspannungs-Einstellungseinheit (490) mindestens einen Widerstand umfasst und eine eingestellte Fehlfunktionsspannung durch Verteilen der Eingangsspannung auf den mindestens einen Widerstand einstellt.

10. Verfahren zur Fehlererkennung einer LED-Kette (Leuchtdiodeneinheit), wobei das Verfahren umfasst:
Anlegen (310), durch eine Stromsteuereinheit, eines Stroms an mindestens eine erste LED-Kette (430) und mindestens eine zweite LED-Kette (440), die parallel geschaltet sind;
Ermitteln (320), ob ein Fehler bezüglich jeder der mindestens einen ersten LED-Kette (430) und der mindestens einen zweiten LED-Kette (440) auftritt; und
Senden (330) von Fehlerinformationen an die Stromsteuereinheit, wenn ein Fehler bezüglich mindestens einer der mindestens einen ersten LED-Kette (430) und der mindestens einen zweiten LED-Kette (440) ermittelt wird, als das Ermittlungsergebnis; und
Blockieren (340) des gesamten Stroms, der zu der mindestens einen ersten LED-Kette (430) unter mindestens einen zweiten LED-Kette (440) geleitet wird, unter Verwendung der Stromsteuereinheit, wenn die Fehlerinformationen empfangen werden; und
**gekennzeichnet durch**
Beurteilen, **durch** eine Fehlfunktionsüberwachungseinheit (480), ob ein Ergebnis der Fehlererkennung bezüglich der mindestens einen ersten LED-Kette (430) und der mindestens einen zweiten LED-Kette (440) normal ist, aufgrund einer an die Stromsteuereinheit angelegten Eingangsspannung, die nicht ausreicht, um die mindestens eine erste LED-Kette (430) und die mindestens eine zweite LED-Kette (440) einzuschalten, oder **durch** Beurteilen, dass das Ergebnis der Fehlererkennung bezüglich der mindestens einen ersten LED-Kette (430) und der mindestens einen zweiten LED-Kette (440) normal ist, wenn die angelegte Eingangsspannung größer als eine eingestellte Fehlfunktionsspannung ist, **durch** Anlegen einer Spannung an die Fehlfunktionsüberwachungseinheit (480), die gleich der Eingangsspannung ist, welche an die Stromsteuereinheit (420) angelegt wird.

11. Verfahren nach Anspruch 10, wobei das Anlegen der Spannung an die mindestens eine erste LED-Kette (430) und die mindestens eine zweite LED-Kette (440) umfasst:
kontinuierliches Anlegen des Stroms an die mindestens eine erste LED-Kette (430) und die mindestens eine zweite LED-Kette (440), wenn sowohl die mindestens eine erste LED-Kette (430) als auch die mindestens eine zweite LED-Kette (440) als das Ermittlungsergebnis normal arbeiten.

## Revendications

1. Appareil pour la détection d'une défaillance d'une chaîne de diodes électroluminescentes, LED, l'appareil comprenant :
une unité de commande de courant (420) pour appliquer un courant à au moins une première chaîne de LED (430) et à au moins une deuxième chaîne de LED (440) qui sont connectées en parallèle entre elles ;
au moins un premier détecteur de défaillance (450) pour détecter si une défaillance se produit par rapport à chacune parmi l'au moins une première chaîne de LED ;
au moins un deuxième détecteur de défaillance (460) pour détecter si une défaillance se produit par rapport à chacune parmi l'au moins une deuxième chaîne de LED ; et
une unité de jugement de résultat de défaillance (470) pour transmettre des informations de défaillance à l'unité de commande de courant lorsqu'une défaillance est détectée par rapport à au moins l'une parmi l'au moins une première chaîne de LED et l'au moins une deuxième chaîne de LED, en tant que résultat de détection de l'au moins un premier détecteur de défaillance et de l'au moins un deuxième détecteur de défaillance,
dans lequel, lorsque les informations de défaillance sont reçues, l'unité de commande de courant bloque l'ensemble du courant qui est appliqué à l'au moins une première chaîne de LED et à l'au moins une deuxième chaîne de LED ; et
**caractérisé par**
une unité de surveillance de dysfonctionnement (480) pour fournir un résultat de dysfonctionnement à l'unité de commande de courant en reconnaissant si un dysfonctionnement se produit par rapport à l'au moins un premier détecteur de défaillance et à l'au moins un deuxième détecteur de défaillance en raison d'une tension d'entrée appliquée à l'unité de commande de courant qui n'est pas suffisante pour allumer l'au moins une première chaîne de LED (430) et l'au moins une deuxième chaîne de LED (440), dans lequel l'unité de surveillance de dysfonctionnement (480) commande l'unité de jugement de résultat de défaillance pour reconnaître des résultats de détection de l'au moins un premier détecteur de défaillance et de l'au moins un deuxième détecteur de défaillance seulement lorsque la tension d'entrée appliquée est supérieure à une tension de réglage de dysfonctionnement, en appliquant une tension à l'unité de surveillance de dysfonctionnement (480) qui est égale à la tension d'entrée qui est appliquée à l'unité de commande de courant (420).

2. Appareil selon la revendication 1, dans lequel, lorsque l'au moins une première chaîne de LED (430) et l'au moins une deuxième chaîne de LED (440) fonctionnent toutes les deux normalement, en tant que résultat de détection de l'au moins un premier détecteur de défaillance (450 ) et de l'au moins un deuxième détecteur de défaillance (460), l'unité de commande de courant (420) applique le courant de manière continue à l'au moins une première chaîne de LED (430) et à l'au moins une deuxième chaîne de LED (440).

3. Appareil selon la revendication 1, dans lequel l'au moins un premier détecteur de défaillance (450), l'au moins un deuxième détecteur de défaillance (460), et l'unité de jugement de résultat de défaillance (470) correspondent à des transistors.

4. Appareil selon la revendication 3, dans lequel l'au moins un premier détecteur de défaillance (450) et l'au moins un deuxième détecteur de défaillance (460) sont allumés lorsque l'au moins une première chaîne de LED (430) et l'au moins une deuxième chaîne de LED (440) fonctionnent normalement, en tant que résultat de détection.

5. Appareil selon la revendication 4, dans lequel l'unité de jugement de résultat de défaillance (470) est éteinte pour interdire la transmission d'informations de défaillance à l'unité de commande de courant (420) lorsque l'au moins un premier détecteur de défaillance (450) et l'au moins un deuxième détecteur de défaillance (460) sont tous les deux allumés.

6. Appareil selon la revendication 3, dans lequel l'au moins un premier détecteur de défaillance (450) ou l'au moins un deuxième détecteur de défaillance (460) est éteint lorsqu'une défaillance de chacune parmi l'au moins une première chaîne de LED (430) et l'au moins une deuxième chaîne de LED (440) est détectée.

7. Appareil selon la revendication 6, l'unité de jugement de résultat de défaillance (470) est allumée en appliquant une tension d'entrée qui est appliqué depuis l'extérieur de l'au moins un premier détecteur de défaillance (450) ou de l'au moins un deuxième détecteur de défaillance (460), et génère les informations de défaillance et transmet les informations de défaillance générées à l'unité de commande de courant (420) lorsqu'au moins l'un parmi l'au moins un premier détecteur de défaillance et l'au moins un deuxième détecteur de défaillance est éteint.

8. Appareil selon la revendication 7, dans lequel l'unité de surveillance de dysfonctionnement (480) comprend :
une unité de réglage de tension de fonctionnement (490) pour régler la tension de réglage de dysfonctionnement.

9. Appareil selon la revendication 8, dans lequel l'unité de réglage de tension de fonctionnement (490) comprend au moins une résistance, et règle une tension de réglage de dysfonctionnement en distribuant la tension d'entrée à l'au moins une résistance.

10. Procédé de détection d'une défaillance d'une chaîne de diodes électroluminescentes (LED), le procédé comprenant :
l'application (310), par une unité de commande de courant, d'un courant à au moins une première chaîne de LED (430) et à au moins une deuxième chaîne de LED (440) qui sont connectées en parallèle entre elles ;
la détection (320) de si une défaillance se produit par rapport à chacune parmi l'au moins une première chaîne de LED (430) et l'au moins une deuxième chaîne de LED (440) ; et
la transmission (330) d'informations de défaillance à l'unité de commande de courant lorsqu'une défaillance est détectée par rapport à au moins l'une parmi l'au moins une première chaîne de LED (430) et l'au moins une deuxième chaîne de LED (440), en tant que résultat de détection ; et
le blocage (340) de l'ensemble du courant qui est appliqué à l'au moins une première chaîne de LED (430) et à l'au moins une deuxième chaîne de LED (440),
en utilisant l'unité de commande de courant, lorsque les informations de défaillance sont reçues ; et
**caractérisé par**
le jugement, par une unité de surveillance de dysfonctionnement (480), de si un résultat de la détection d'une défaillance par rapport à l'au moins une première chaîne de LED (430) et à l'au moins une deuxième chaîne de LED (440) est normal en raison d'une tension d'entrée appliquée à l'unité de commande de courant qui n'est pas suffisante pour allumer l'au moins une première chaîne de LED (430) et l'au moins une deuxième chaîne de LED (440), ou par le jugement du résultat de la détection de la défaillance par rapport à l'au moins une première chaîne de LED (430) et à l'au moins une deuxième chaîne de LED (440) comme étant normal lorsque la tension d'entrée appliquée est supérieure à une tension de réglage de dysfonctionnement, par l'application à l'unité de surveillance de dysfonctionnement (480) d'une tension égale à la tension d'entrée qui est appliquée à l'unité de commande de courant (420).

11. Procédé selon la revendication 10, dans lequel l'application du courant à au moins une première chaîne de LED (430) et à au moins une deuxième chaîne de LED (440) comprend :
l'application du courant de manière continue à l'au moins une première chaîne de LED (430) et à l'au moins une deuxième chaîne de LED (440) lorsque l'au moins une première chaîne de LED (430) et l'au moins une deuxième chaîne de LED (440) fonctionnent toutes les deux normalement, en tant que le résultat de détection.
